# EUROPEAN PATENT APPLICATION

(11) **EP 1 170 913 A2**
(43) Date of publication of application: **09.01.2002**
(21) Application number: 01305237.8
(22) Date of filing: 15.06.2001
(51) Int. Cl.: H04L 25/02

(54) **Bus transceiver**

(30) Priority: 15.06.2000 US 595160
(71) Applicant: Schneider Automation Inc., North Andover, Massachusetts 01845 (US)
(72) Inventor: Breilinger, Richard H., Hampstead, NH 03841 (US)
(74) Representative: Gray, John James

(57) **Abstract**

The present invention is a transceiver interfaced between a controller and a CAN communication bus of a control system. The transceiver has a single power input of 3.3 volts. The transceiver further has a data input for receiving a data signal from the controller. An input to an output stage is operably connected to the data input. A switch is operably connected to the CAN communication bus and to an output of the output stage. An input of a receiver is operable connected to the CAN communication bus and the switch for transmitting a signal from the CAN communication network bus to the controller. The output of the receiver is operably connected to a data output for transmitting the signal to the controller.

## Description

This invention relates generally to the field of transceivers. More specifically, the present invention relates to a low power CAN transceiver for interfacing between a controller and communication bus.

Control systems are used extensively in many automation applications for controlling a variety of tasks. CAN (controller area network) is a serial bus system especially suited for networking "intelligent" devices as well as sensors and actuators within a control system or sub-system. In general, CAN is suitable for many applications where several microcontroller-based sub-systems or devices have to communicate. Some of these applications involve control systems for industrial control, such as control of machinery for textiles, printing, manufacturing, robotics, packaging, medical treatment, automobiles, etc. Both complex and simple tasks are effectively and quietly executed by control systems. The controllers and devices typically communicate with each other via a CAN communication bus. The communication bus can interconnect the controller with multiple input/output (I/O) devices such as motion controllers, sensors, gauges, monitors, display terminals, valves, motors, machinery, alarms, etc.

CAN is a serial bus system especially suited for networking "intelligent" devices as well as sensors and actuators within a system or sub-system. It has multi-master capabilities wherein all CAN nodes are able to transmit data and several CAN nodes can request the bus simultaneously. In CAN networks there is no addressing of subscribers or stations in the conventional sense, but instead, prioritized messages are transmitted. A transmitter sends a message to all CAN nodes (broadcasting). Each node decides on the basis of the identifier received whether it should process the message or not. The identifier also determines the priority that the message enjoys in competition for bus access.

The main application fields of CAN networks are industrial control systems and embedded networks. In general, CAN is suitable for all applications, where several microcontroller-based sub-systems or devices have to communicate. Can provides multi-master functionality and substantial real-time capability. The enhanced features of CAN protocol make CAN-based networks suitable for safety-critical applications.

Standardized protocols include CANopen, DeviceNet and Smart Distributed Systems.

When the bus is idle, several nodes on the control system can start transmission of a data message. Each node reads back, bit by bit, from the communication bus during the message transmission and compares the transmitted bit value with the received bit value. By definition, the bits with a dominant value overwrites those with a recessive value (this has to be provided by the transceiver).

When data are transmitted by CAN, no stations are addressed, but rather, the content of the message is designated by an identifier that is unique throughout the network. This concept of Broadcast Communication means that every station of the network can listen to the data being transmitted. The identifier defines not only the content but also the priority of the message.
This is important for bus allocation when several stations are competing for bus access.

A transceiver is typically interfaced between the controller and the communication bus. The transceiver converts logic level signals to a signal suitable for transmission on data bus cables, or from data bus signal level to logic level. As with most applications, power conservation is a significant concern. Circuit component designers continually seek to reduce the amount of power required by circuit components and machines while simultaneously maintaining component compatibility. For instance, in the past, transceivers typically operated at 12 volts or 5 volts, but not as low as 3.3 volts due to circuit design limitations. However, as with many other components, transceivers have now been designed to operate at lower power specifications, i.e., 3.3 volts.

Even though the redesigned transceivers are compatible with control systems and components implementing 3.3 volts, a 5 volt power source has been required in addition to the 3.3 volt power source. Because of voltage losses associated with internal components of the transceiver, specifically the coupling diode that connects the output stage of the transceiver to the communication bus, power sources greater than 3.3 volts have been required. Thus, a 5 volt power source has typically been supplied to the transceiver so that an operable voltage on the communication bus is able to be provided after incurring voltage losses.

This invention in different independent aspects set forth below is directed to solving or at least mitigating these and/or other problems..

One aspect of the present invention provides a low power transceiver for interfacing between a controller and a communication bus of a control system. The transceiver has a single power input. The transceiver also has a data input operably connected to the controller. The data input receives a data signal from the controller. The transceiver also has an output stage having an input and an output. The input of the output stage is operably connected to the data input. A switch interfaces between the communication bus and the output of the output stage.
A receiver transmits the data signal from the communication bus to the controller. The receiver has an input and an output, and the input of the receiver is connected to the communication bus and the switch. The output of the receiver is connected to the data output of the transceiver for transmitting the data signal from the communication bus to the controller.

Other features and advantages of the invention, which are believed to be novel and nonobvious, will be apparent from the following specification taken in conjunction with the accompanying drawings in which there is shown a preferred embodiment of the invention. Reference is made to the claims for interpreting the full scope of the invention which is not necessarily represented by such embodiment.

### BRIEF DESCRIPTION OF THE DRAWINGS

FIGURE 1 is a partial block diagram of a control system illustrating the relationship between a controller, a communication bus and a transceiver;
FIGURE 2 is a schematic diagram of a transceiver known in the prior art; and,

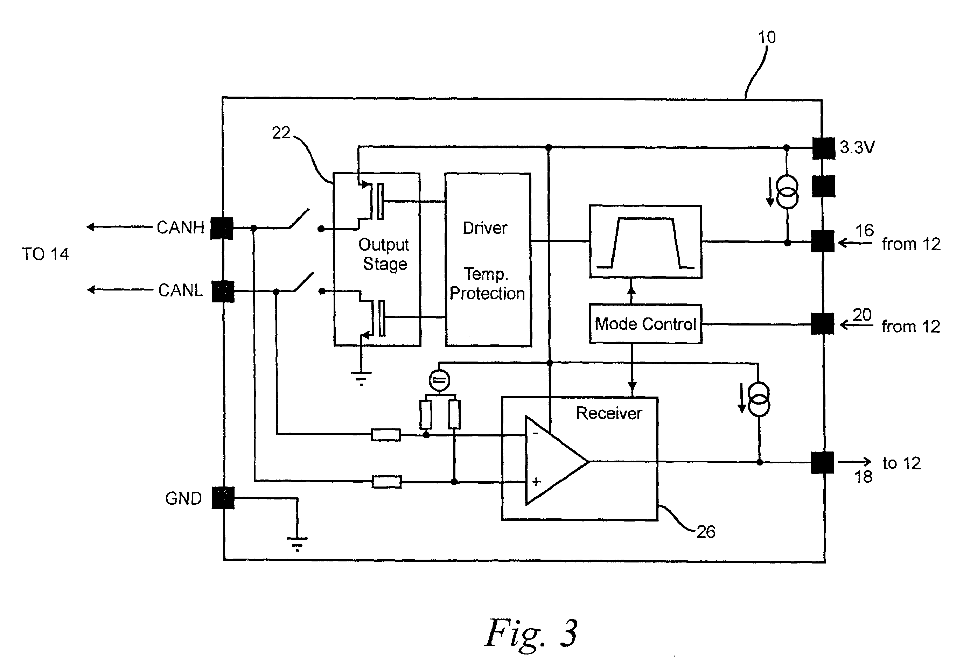

FIGURE 3 is a schematic diagram of the transceiver of the present invention.

### DETAILED DESCRIPTION

Although this invention is susceptible to embodiments of many different forms, a preferred embodiment will be described and illustrated in detail herein. The present disclosure exemplifies the principles of the invention and is not to be considered a limit to the broader aspects of the invention to the particular embodiment as described.

Prior to this invention, a need existed for a transceiver operating at 3.3 volts and only requiring a 3.3 volt power source.

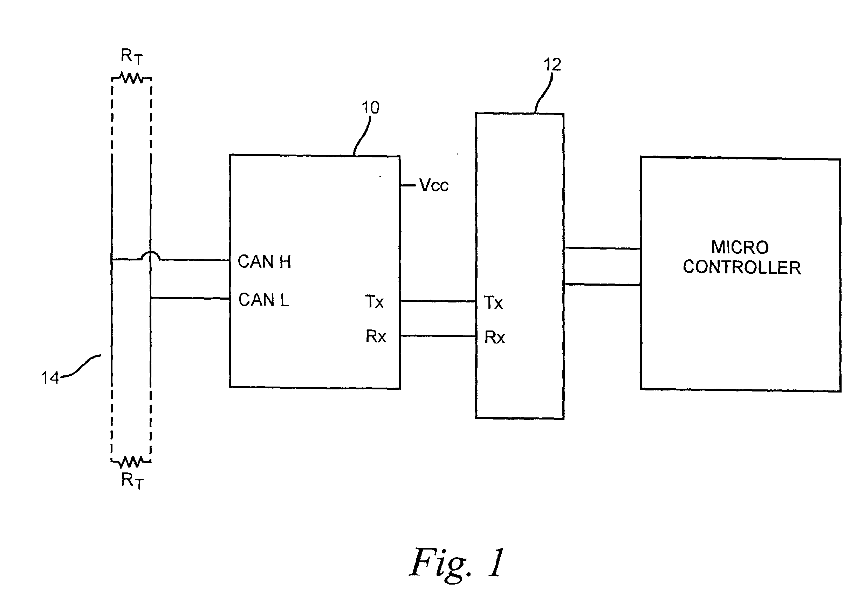

FIGURE 1 is a partial block diagram of a control system. A transceiver 10 is interfaced between a controller 12 and a communication bus 14. The communication bus 14 is a serial bus, preferably CAN (controller area network)or CANopen. A plurality of devices (not shown) are interconnected to the communication bus 14 for control by the controller 12. Electrical signals, data and/or control, travel back and forth between the controller 12 and the modules of the control system.

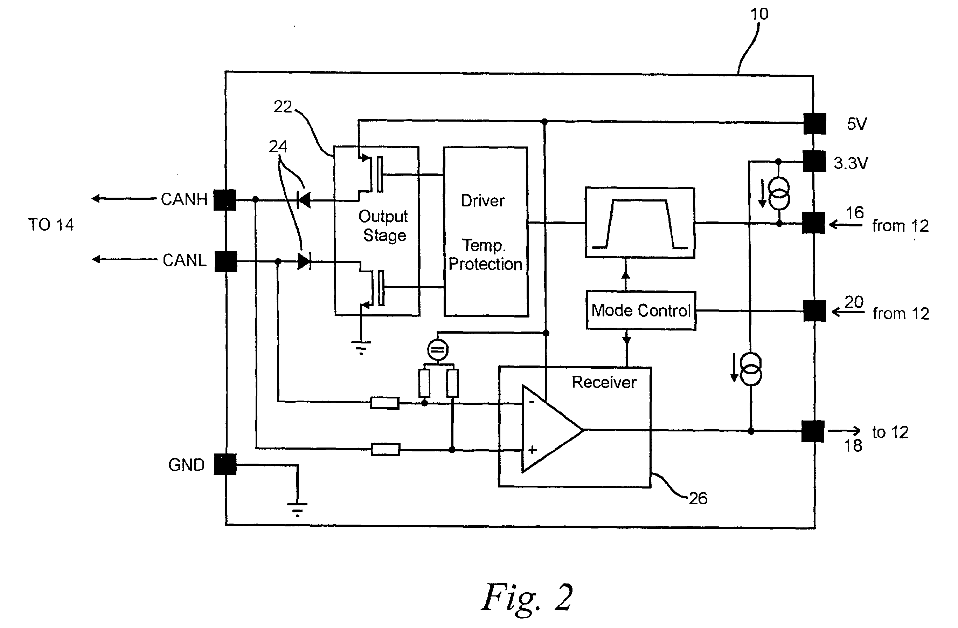

FIGURE 2 depicts a schematic diagram of a known transceiver 10. The transceiver 10 has a data input 16 and a data output 18, both operably connected to a controller 12. An output stage 22 of the transceiver 10 is interconnected with a communication bus 14. A pair of diodes 24 electrically couple the output of the output stage 22 to the communication bus 14. The diodes 24 prevent an unpowered node on the communication bus 14 from adversely affecting data flowing on the bus to other powered nodes. A receiver 26 for receiving data signals from the communication bus 14 is coupled to the diodes 24 and to the communication bus 14.

Current CAN transceivers must operate on 5 volts to meet CAN interface voltage requirements and decouple from the communication bus 14 when powered off. A 5 volt power source 30 is connected to the transceiver 10. In addition, for a transceiver 10 designed to operate with controllers 12 at 3.3 volts, an additional power source of 3.3 volts is internally connected to the data input 16 and data output 18 of the transceiver 10. Thus, even though some parts of the transceiver 10 are designed to operate at 3.3 volts, a 5 volt power source is required for proper operation of other sections of the transceiver 10. In order to provide an operable voltage on the communication bus 14, a power source greater than 3.3 volts is required in order to compensate for the voltage loss of approximately 1.5 volts in output swing due to the voltage drop across the coupling diodes 24. Thus, a 5 volt power source is required to ensure proper operation on the communication bus 14.

In one embodiment, the present invention allows the fabrication of a CAN transceiver 10 that operates on 3.3 volts, and meets all CAN requirements for communication bus voltage drive and isolation in the powered off state.

A data signal, is sent by the controller 12 and received at the data input 16 of the transceiver 10. Control signals from the controller 12 are received by the transceiver at its control input 20. Within the transceiver 10, the data signal is modified to have a controlled slew rate on the CAN transmitter output. The output stage 22 of the transceiver cooperates with the 3.3 volt power source and the data signal for preparing the data signal received from the controller 12 for transmission onto the communication bus 14. Preferably, the output stage comprises a pair of operably connected field effect transistors (FET). A pair of solid state switches 28 couple, or interface, the output of the output stage 22 with the communication bus 14. The switches 28 can be comprised of FETs; or optical or photo-resistive elements.

A data signal on the communication bus 14 is received by the receiver 26 within the transceiver 10. The output of the receiver 26 is operably connected to the data output 18 of the transceiver 10 for connection with the controller 12.

By substituting solid state switches 28 for the coupling diodes 24 used in the prior art, the voltage drop incurred across the diodes 24 is eliminated. Thus, a 5 volt power source is not required and a single, reduced power source of 3.3 volts can be implemented for a 3.3 volt transceiver 10. The switches 28 allow the transceiver 10 to properly operate and meet all CAN requirements for communication bus 14 voltage drive and powered off isolation. In the unpowered state, the switch 28 is open and the transceiver 10 is isolated from the communication bus 14.

While the specific embodiments have been illustrated and described, numerous modifications are possible without departing from the scope or spirit of the invention.

## Claims

1. A transceiver for interfacing between a controller and a communication bus, the transceiver comprising:
a single power input;
a data input for operably connecting to the controller, the data input for receiving a data signal from the controller;
an output stage having an input and an output, wherein the input of the output stage is operably connected to the data input;
a switch for operably connecting to the communication bus and the output of the output stage;
a receiver for transmitting a data signal from the communication bus to the controller, the receiver having an input and an output, the input of the receiver for operably connecting to the communication bus and the switch; and,
a data output operably connected to the output of the receiver for connecting with the controller.

2. The transceiver of claim 1 wherein the switch is electronic.

3. The transceiver of claim 2 wherein the switch comprises at least one field effect transistor.

4. The transceiver of claim 2 wherein the switch comprises at least one photo-resistive element.

5. The transceiver of any preceding claim wherein the output stage comprises at least one field effect transistor.

6. The transceiver of any preceding claim wherein the communication bus is a serial type bus.

7. The transceiver of any preceding claim wherein the single power input is for connecting to a 3.3 volt power source.

8. The transceiver of any one of claims 1 to 6 wherein the single power input is for connecting to a power source less than 3.3 volts.

9. The transceiver of claim 6 wherein the communication bus is one of CAN or CANopen.

10. A control system comprising:
a controller;
a transceiver operably connected to the controller, the transceiver interfacing a communication bus with the controller, the transceiver further comprising:
a single power input;
a data input for operably connecting to the controller, the data input for receiving a data signal from the controller;
an output stage having an input and an output, wherein the input of the output stage is operably connected to the data input;
a switch for operably connecting to the communication bus and the output of the output stage;
a receiver for transmitting a data signal from the communication bus to the controller, the receiver having an input and an output, the input of the receiver for operably connecting to the communication bus and the switch; and,
a data output operably connected to the output of the receiver for connecting with the controller.

11. The control system of claim 10 wherein the switch is electronic.

12. The control system of claim 11 wherein the switch comprises at least one field effect transistor.

13. The control system of claim 11 wherein the switch comprises at least one photo-resistive element.

14. The control system of any one of claims 10 to 13 wherein the output stage comprises at least one field effect transistor.

15. The control system of any one of claims 10 to 14wherein the communication bus is a serial type bus.

16. The control system of any one of claims 10 to 15wherein the single power input is for connecting to a 3.3 volt power source.

17. The control system of any one of claims 10 to 15 wherein the single power input is for connecting to a power source less than 3.3 volts.

18. The control system of any one of claims 10 to 17wherein the network communication bus is one of CAN or CANopen.
